# EUROPEAN PATENT APPLICATION

(11) **EP 1 516 704 A2**
(43) Date of publication of application: **23.03.2005**
(21) Application number: 04255296.8
(22) Date of filing: 01.09.2004
(51) Int. Cl.: B25J 9/16, G05B 19/4061

(54) **Device for determining interference region of robot**

(30) Priority: 04.09.2003 JP 2003312706
(71) Applicant: FANUC LTD, Minamitsuru-gun, Yamanashi 401-0597 (JP)
(72) Inventor: Okuda, Mitsuhiro, FANUC Manshonharimomi, Minamitsuru-gun Yamanashi 401-0511 (JP); Fuchigami, Hirokazu FANUC Manshonharimomi, Minamitsuru-gun Yamanashi, 401-0511 (JP)
(74) Representative: Billington, Lawrence Emlyn

(57) **Abstract**

A device for determining an interference region of a robot, capable of determining an interference region/non-interference region and the like on an off-line layout space without difficulty. Geometric data of a robot and peripheral objects is read from a CAD system or the like to be displayed in the form of a layout display, to thereby form a cage region. An initial occupied region is found by calculating a three-dimensional position of each arm at an initial position. An operation simulation is run, and the tree-dimensional positions are repeatedly calculated, thereby finding the aggregate sum of the occupied region. After the robot is moved, a total occupied region G, an overlapping region H, a protruding region K, a non-occupied region M and the like are displayed in different colors, to thereby perform layout correction of a peripheral object, a change of the cage region, etc. It is also possible to judge the presence or absence of the overlapping region H/protruding region K and to search "a hidden non-occupied region" by way of a sectional display in which points A, B and C are designated.

## Description

### BACKGROUND OF THE INVENTION

### 1. Field of the Invention

The present invention relates to a device for determining an interference region of a robot by performing an off-line simulation of an operation of the robot.

### 2. Description of the Related Art

In general, when an operation is carried out by a robot, there exists some peripheral object, such as a jig for supporting a workpiece, around the robot. It is required for security that the robot be enclosed by a safety fence to keep someone away from the region in which the robot arm operates. Where the peripheral object, the safety fence and the like actually should be located in a workplace is a serious issue. If the location of the peripheral object and safety fence is improper, it is dangerous since there may occur an interference accident when the robot is operated. Furthermore, it is a waste of time and energy to relocate them.

In prior art, peripheral objects including a jig, a safety fence and the like are preliminarily arranged by means of a robot simulation device, and then an operation program for the robot is so created as to avoid interference with the peripheral objects. An alternative measure is to repeatedly employ a well-known method in which the operation simulation for the robot is implemented with peripheral objects arranged on a layout space to check if there occurs interference, and to repeat correction of the program or layout by trial and error to determine the location that does not incur any interference.

If the jig and the safety fence are arranged in positions that are far away from the robot, it does assure safety, but on the other hand, there will be a hitch in work by an operator. If they are arranged near the robot, however, it enlarges the possibility of interference. Because of such a dilemma, it is not easy in practice to determine the most proper location of the peripheral objects, so that the determination procedure takes considerable time. In addition, it is conventionally impossible to recognize an interference of an end effector such as a tool mounted on a robot arm. Therefore, interference between the end effector mounted on the robot arm and the peripheral objects therearound is occasionally found after the robot is actually installed in the workplace.

### SUMMARY OF THE INVENTION

The present invention provides a device for determining an interference region of a robot, which is capable of easily determining a region in which there occurs interference, one in which there occurs no interference, and the like, on a layout space prepared offline. By so doing, the present invention also intends to enhance the efficiency of procedure for determining proper locations of peripheral objects including a jig, a safety fence and so on.

According to an aspect of the present invention, the interference region determining device of the present invention comprises: storage means storing a geometric model of a robot arm; position/posture calculation means for successively calculating position/posture of the robot arm in accordance with a motion command read from an operation program of the robot; occupied region-calculating means for calculating a region occupied by the robot arm when the robot arm takes the position/posture in accordance with the motion command based on the calculated position/posture and the geometric model of the robot arm; means for obtaining and updating a total occupied region of the robot arm by successively and aggregately adding the calculated occupied regions of the robot arm and store the updated total occupied region; and displaying means for displaying the updated total occupied region on a display screen. With this constitution, an operation range of the robot arm can be visually recognized as a total occupied region, which makes it easy to determine the proper locations of the jig, the safety fence and the like, avoiding such a region.

The device may further comprise cage region setting means for setting a cage region, and the displaying means may display the set cage region on the display screen. With this constitution, it becomes possible to obtain information useful for determining, for example, a proper location of the safety fence.

In this case, the displaying means may display a non-occupied region not belonging to the total occupied region within the set cage region on the display screen, and further, may display a protruding region belonging to the total occupied region outside the set cage region on the display screen, to thereby facilitate the determination of the proper location of the safety fence.

The storage means may further store a geometric model of a peripheral object to be arranged in the vicinity of the robot arm, and the displaying means may display a region occupied by the peripheral object based on designated position/posture of the peripheral object and the stored geometric model of the peripheral object and display an overlapping region where the region occupied by the peripheral object overlaps the total occupied region. This makes it possible to obtain visual information on whether or not there is interference between the robot arm and the peripheral object, such as the safety fence and the jig, and if there is any, it is also possible to obtain information on where the interference exists.

The device may further comprise: judging means for obtaining a region occupied by the peripheral object based on designated position/posture of the peripheral object and the stored geometric model of the peripheral object, and judging whether or not an overlapping region where the region occupied by the peripheral object overlaps the total occupied region exists; and message issuing means for issuing a message indicating an existence of the overlapping region when it is judged that there exists the overlapping region by the judging means. This enables more reliable determination of the presence or absence of interference between the robot arm and the safety fence, the jig and the like.

The device may further comprise means for altering position/posture of the geometric model of the peripheral object on the display screen and means for storing the altered position/posture of the peripheral object, to thereby enable to shift the safety fence, the jig and the like, located at the position causing interference, to a region in which there is no possibility of interference.

It is typical that the display of the total occupied region, the non-occupied region, the region occupied by the peripheral object, etc. on the display screen is performed in the form of a perspective view. However, the displaying means may display a sectional view of such regions taken along a designated plane. The sectional view allows an operator to clearly grasp a three-dimensional relation between the occupied region, the non-occupied region, the region occupied by the peripheral object, etc.

According to another aspect of the present invention, the device comprises: storage means storing geometric models of a robot arm and an end effector mounted on the robot arm; position/posture calculation means for successively calculating position/posture of the robot arm and the end effector in accordance with a motion command read from an operation program of the robot; occupied region-calculating means for calculating a region occupied by the robot arm and the end effector when the robot arm and the end effector take the position/posture in accordance with the motion command based on the calculated position/posture and the geometric model of the robot arm and the end effector; means for obtaining and updating a total occupied region of the robot arm and the end effector by successively and aggregately adding the calculated occupied regions of the robot arm and the end effector and store the updated total occupied region; and displaying means for displaying the updated total occupied region on a display screen. With this constitution, it becomes possible for an operator to clearly grasp the total occupied region of the robot arm and also the end effector mounted thereon.

With the present invention, it is possible to easily determine a region where there occurs an interference and a region where there occurs no interference in a layout space. This facilitates a procedure for determining a proper location of the peripheral object such as the safety fence and the jig.

### BRIEF DESCRIPTION OF THE DRAWINGS

FIG. 1 is a block diagram showing a system configuration including a device for determining an interference region of a robot according to the present embodiment;
FIG. 2 is a schematic flowchart of a process implemented in the present embodiment;
FIG. 3 shows one example of a draft layout in which the robot is located at an initial position;
FIG. 4 shows a state in which a cage region is added into the layout of FIG. 3;
FIG. 5 is an explanatory view showing an example of a discriminative display of various regions;
FIG. 6 is a view showing as an example a locational relation between the robot and the peripheral objects after correction of the layout; and
FIG. 7 shows an example of a sectional display.

### DETAILED DESCRIPTION OF THE PREFERRED EMBODIMENTS

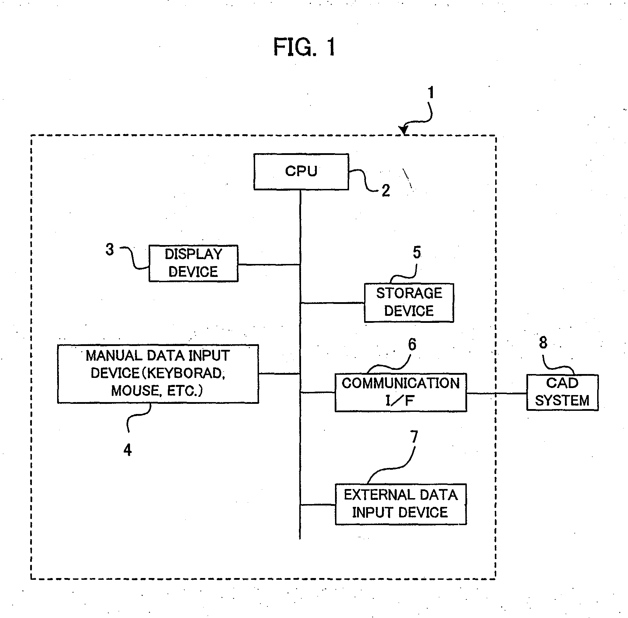

FIG. 1 is a block diagram showing a system configuration including a device for determining an interference region of a robot according to the present embodiment. In FIG. 1, a device 1 for determining an interference region of a robot comprises a CPU 2, a display device 3 connected to a bus line of the CPU 2, a manual data input device 4, a storage device 5, a communication interface 6 and an external data input device 7. A reference character 8 represents a CAD system connected to the device 1 for determining an interference region of a robot through the communication interface 6. It is possible to read three-dimensional geometric data (including dimensional data) of the robot which is a simulation target, three-dimensional geometric data (including dimensional data) in a state where the robot is equipped with an end effector (such as tool), three-dimensional geometric data (including dimensional data) of peripheral objects (such a jig and a safety fence), and the like, from the CAD system 8 into the device 1 for determining an interference region of a robot, to thereby store the above-listed data in the storage device 5.

In place of the CAD system, another external device (for example, a personal computer) having a function (software) for creating similar data may be utilized. The external data input device 7 is a device for carrying out read/write of, for example, a floppy (registered trademark) disk, CD-RW and so on. The geometrical data of the robot and the like may be inputted from the external data input device 7.

Similarly, operation program data (position data, data for designating motion format, velocity command data, an acceleration/deceleration constant and the like) of a robot, which is a simulation target, can be inputted from the external data input device 7. Needless to say, such data may be inputted through the communication interface 6. For instance, in case that the CAD system 8 is provided with an off-line programming function, the operation program data that is created offline can be inputted through the communication interface 6.

The storage device 5 comprises ROM, RAM, rewritable nonvolatile memory, etc. Stored in the storage device 5 are a program for performing overall control on the whole system in addition to various data inputted to the device 1 for determining an interference region of a robot as described above, a program for running the simulation of the operation program, a program for displaying an animated image imitating the robot, the end effector mounted thereon, the peripheral objects and the like on the screen of the display device 3, and various parameters and so on. The storage device 5 further stores a program and a parameter necessary for implementing processes mentioned below.

The manual data input device 4 has a keyboard, a mouse and the like, and is designed to carry out editing, correction, input and the like with respect to various program data, parameter data, commands, etc., by way of manual operation, if required. Moreover, it is possible to design the layout by moving or rotating the robot and peripheral devices displayed in the display device 3 by way of mouse operation or the like, and to create a display with an image of a selected object (for example, the safety fence) removed.

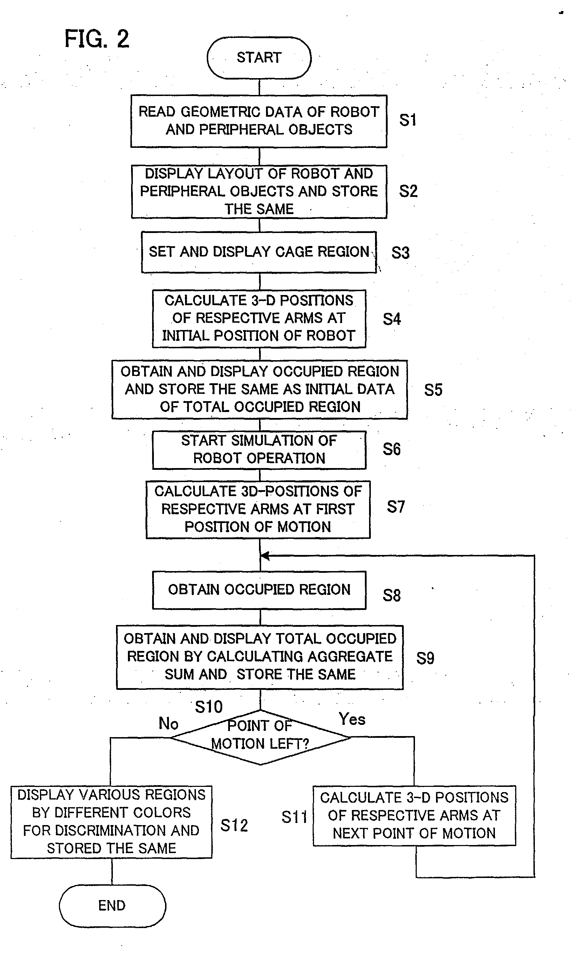

FIG. 2 is a schematic flowchart showing a process implemented in the present embodiment using the above-mentioned system, and a gist of each step is described below. Additionally, it is premised here that the geometric data of the robot which is a target for interference recognition in the present embodiment (data on the robot without an end effector and data on the robot with an end effector), the geometric data of the peripheral objects, data of a draft layout of the robot and the peripheral objects (three-dimensional position/posture data), and the operation program data are prepared on the CAD system 8 or on a storage medium (such as a floppy disk) which is set in the external data input device 7.

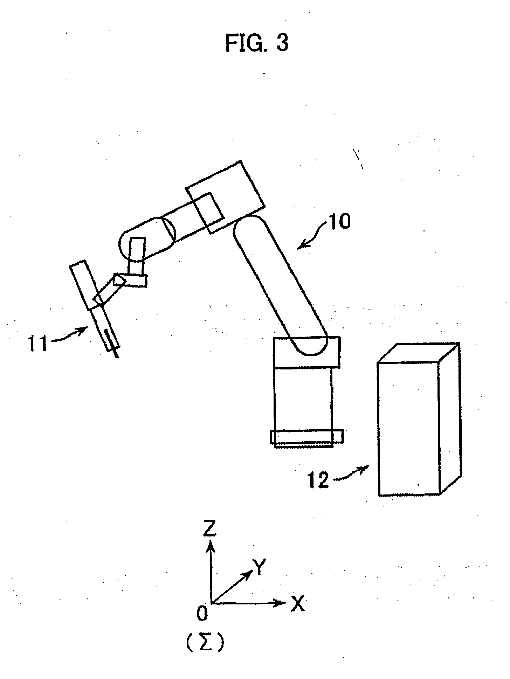

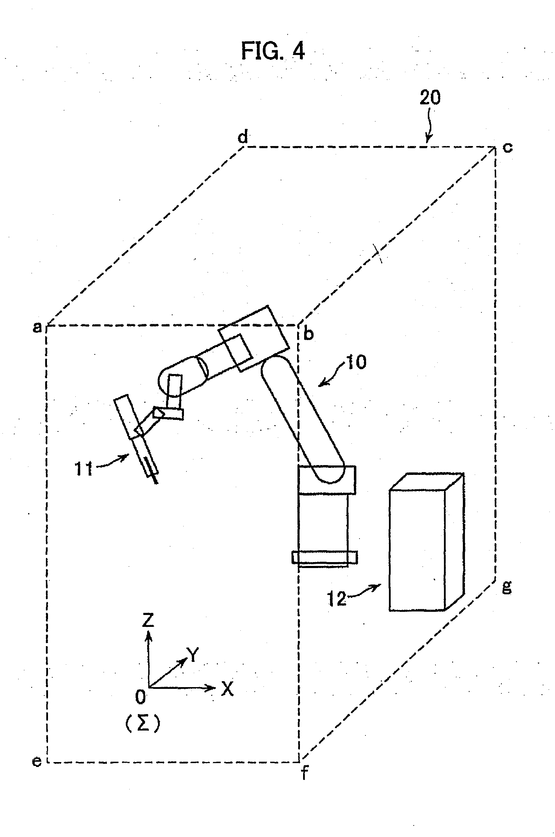

The reason why the layout herein is referred to as "draft layout" is that the layout made in accordance with the draft is appropriately corrected, as described below. Defined on a layout space to describe the layout is a three-dimensional orthogonal coordinate system Σ (0 - XYZ) in which a level surface on which the robot is installed is brought into line with an XY plane surface (refer to FIG. 3).
Step S1: The geometric data of the robot and the peripheral objects, which are prepared on the CAD system 8 or on the storage medium are read and stored in the storage device 5 in response to a command from the manual data input device 4. The geometric data of the robot, which is to be read according to need, is either the data of the robot without an end effector or that of the robot with an end effector. As to the geometric data of the peripheral objects, geometric data of the jig, that of the safety fence and the like are read.
Step S2:A layout of the robot and peripheral devices (partially or in whole) are displayed on the screen of the display device 3, based on the data read Step S1. Details of the layout are determined in accordance with the draft layout, and one example is illustrated in FIG. 3. In this example, an image of a robot 10 with an end effector (such as tool) 11 mounted thereon and an image of a jig 12 are shown in a perspective view in the layout. Additionally, an image of the safety fence is hidden (it is possible, however, to switch "non-display" to "display" by a manual command).
   It is preferable that display positions of the robot 10 and the end effector 11, which are determined according to the draft layout, coincide with an initial position of the robot in the operation program to be subjected to the simulation. It is also desirable that the layout be still correctable at this stage according to need. For instance, in case that the position and posture of a peripheral object 12 apparently require to be corrected, the correction is carried out on the screen by way of mouse operation or the like, to thereby update three-dimensional position data of the peripheral object 12.
Step S3: A cage region is set in the displayed layout. The cage region is set as a region giving an indication of a position at which the safety fence is to be installed or as a range of the robot operation, which is determined on the basis of user's individual circumstances and the like. A shape, size and position of the cage region to be formed are determined on the screen by way of mouse operation or the like. For instance, in case that a rectangular parallelepiped-shaped cage region as shown in FIG. 4 is determined, the cage region is formed in the following steps.
   (1) Height h measured from a level surface (XY plane surface determined on the coordinate system Σ) is manually inputted to display a ceiling surface of the cage region on the screen.
   (2) Positions of three points (for example, a, b and c or a, b and d, etc.) on the ceiling surface are designated on the screen. As a result, a rectangular parallelepiped-shaped cage region 20 as illustrated is configured.

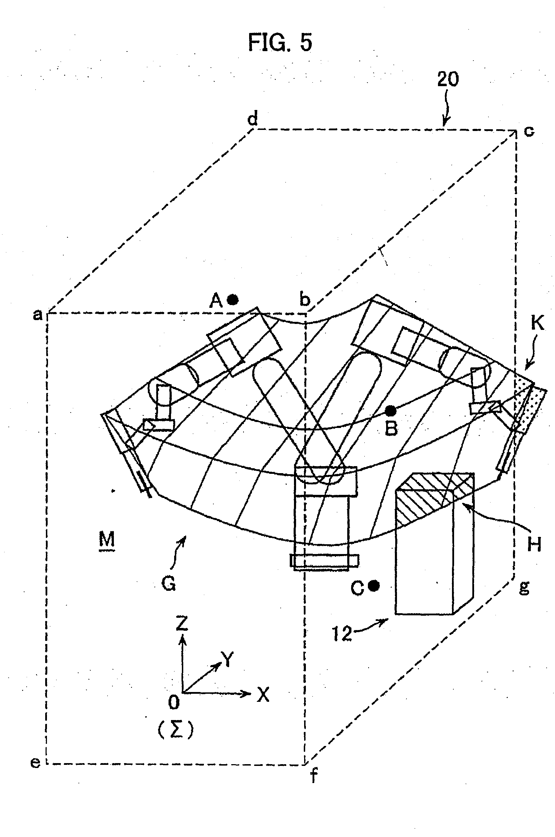

   Instead of defining the three points on the ceiling surface, positions of three points (for example, e, f and g) on the XY plane surface may be designated.
Step S4: Three-dimensional positions of respective arms at the initial position of the robot are calculated.
Step S5: Based on the calculation result of Step S4 and the geometric data of the robot (with the end effector), an occupied region that is occupied by the robot (with the end effector) at the initial position is calculated and displayed. For instance, in an image shown in FIG. 4, a part occupied by the robot 10 and the end effector 11 is color-displayed in yellow. Moreover, data of the occupied region is stored as initial data of a "total occupied region".
Step S6: The operation program data are read through the external data input device 7, thereby starting simulation of a robot operation.
Step S7: The three-dimensional position of the respective arms at a first point of motion are calculated (defined by positions of respective axes at interpolation positions).
Step S8: Based on the calculation result of Step S7 and the geometric data of the robot (with the end effector), an occupied region of the robot (with the end effector) at the first point of motion is calculated.
Step S9: The aggregate sum of the occupied region calculated in Step S8 and the stored "total occupied region" is obtained to thereby update and store the aggregate sum as an updated "total occupied region". At the same time, the display is updated.
Step S10: It is determined whether or not the point of motion is left, and if it is, the procedure proceeds to Step S11. If not, the procedure proceeds to Step S12.
Step S11: The three-dimensional positions of respective arms at the next point of motion (defined by positions of the respective axes at the interpolation position) are calculated, and the process returns to Step S8. Thereafter, Steps S8 through S11 are repeated until the position of motion disappears. In this process, the total occupied region is gradually expanded. The state of the expansion is simultaneously displayed on the screen of the display device 3 (expansion of the part displayed in yellow).
Step S12: Ranges of various regions are calculated and displayed discriminatingly on the screen of the display device 3. FIG. 5 is an explanatory view showing an example of a discriminative display of the various regions. Herein, the various regions include the following regions.
   ● Total occupied region G: Aggregation of points occupied by the robot (with the end effector) at least once during the operation simulation.
   ● Overlapping region H: A region that overlaps the peripheral object 12 at least once during the operation simulation.
   ● Protruding region K: A region that belongs to the total occupied region G and is located outside the cage region 20.
   ● Non-occupied region M: A region that is located in the cage region 20 and does not belong to the total occupied region G.

Examples of color display of the above regions are described below.
○ Overlapping region H: Displayed in red. Only a contour of the peripheral object 12 is displayed by a white line against the red background so as to be visible.
○ Protruding region K: Displayed in blue.
○ Non-occupied region M: Displayed in green. As to a region that overlaps a region in which the peripheral object 12 exists, a contour of the peripheral object 12 is displayed by a white line against the green background so as to be visible.
○ Total occupied region G: Displayed in yellow (corresponding to the expanded part that is displayed in yellow in the initial display). Only the overlapping region H and the protruding region K are displayed preferentially in the respective display colors listed above.

Needless to say, there is a great possibility that the overlapping region H and the protruding region K do not exist. In this case, the overlapping region H and the protruding region K are not displayed on the screen (there is no region displayed in red and in blue). The example illustrated in FIG. 5 shows the case in which there are the overlapping region H and the protruding region K. For convenience of illustration, the overlapping region H is shown by hatching, and the protruding region K by dots. By looking at such displays, the operator can recognize without difficulty the presence or absence of interference and of protrusion that is outside the predesignated cage region. Depending on the circumstances, it is possible to judge whether the overlapping region H and/or the protruding region K exists or not, to generate message output (alarm signal) indicative of a result of the judgement, and to inform the operator of the result by characters (displayed on the screen of the display device 3) or sound or the like.

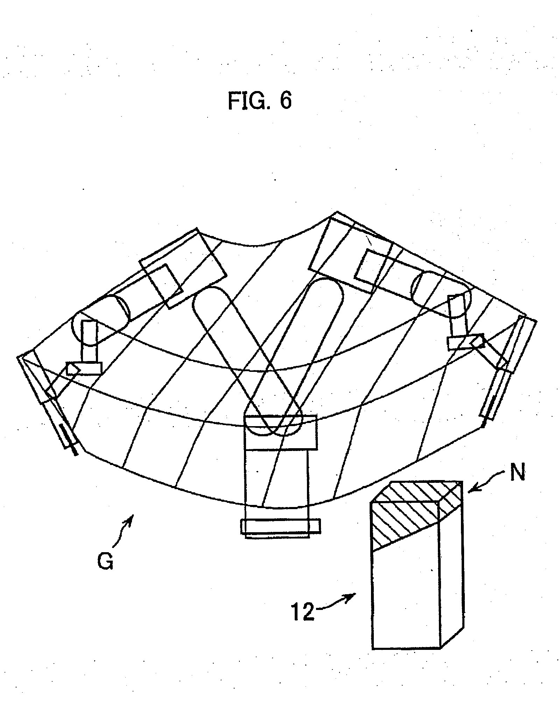

According to the displayed or informed result, the operator takes proper steps. First, if the overlapping region H is displayed, the layout is corrected by moving the peripheral object 12 appropriately so that there occurs no interference, in consideration of a position, size and the like thereof. This operation can be carried out, as stated above, by means of a mouse of the manual data input device 4 or the like. FIG. 6 shows as an example a locational relation between the robot 10 and the peripheral object 12 after the layout correction. In FIG. 6, a reference character N denotes "a region escaped from the overlap with the total occupied region" (hereinafter referred to as "an escape region"), which is displayed for example in purple. The operator can recognize that the peripheral object 12 gets out of the total occupied region, based on the fact that the red display of the overlapping region H shown in FIG. 5 is changed to the purple display of the escape region N.

If the presence of the protruding region K is recognized as shown in FIG. 5, the cage region can be reformed (corrected for expansion, motion, etc.). After the correction, the cycle following Step S3, which is the aforementioned process, may be implemented again, to thereby confirm the absence of the overlapping region H and protruding region K on a screen page displayed in Step S12. Under circumstances in which the cage region is hard to be corrected, another action (such as a change to the location of the robot and that to a motion path of the robot) may be taken. In this case, too, the cycle subsequent to the Step S3, which is the aforementioned process, can be implemented again after the above action is taken, to thereby confirm that the overlapping region H and the protruding region K are absent on the screen page displayed in Step S12.

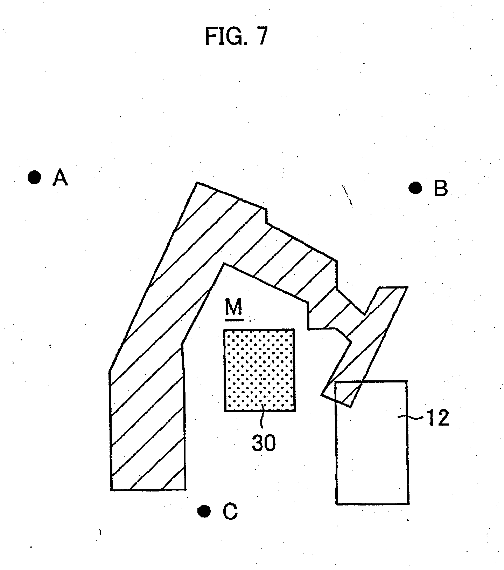

Although the display on the screen of the display device 3 is a perspective view in the above explanation, the display can be switched to a screen page shown in a sectional display format. A section (cross-sectional surface) to be displayed can be designated for example on the screen page displayed in the above-described Step S12. In other words, by designating the three points through manual input, which are shown by reference characters A, B and C in FIG. 5, a process for determining a plane surface passing the points A, B and C is carried out in the inside of the device 1 for determining an interference region of a robot, thereby displaying, for example, a screen page as illustrated in FIG. 7.

To be more accurate here, even if the points are designated on the screen, there is a lack of single-degree-of-freedom of information. Therefore, the lack is overcome by designating proper additional information or additional conditions. For instance, on the condition that the points A, B and C are those located on a contour surface of the cage region 20, a surface a-b-c-d is designated for the points A and B, and a surface a-e-f-b for the point C. This makes it possible to calculate an intersecting point of a linear line passing the point A and extending in a direction of a visual axis in a perspective view and the surface a-b-c-d, an intersecting point of a linear line passing the point B and extending in the direction of the visual, axis in the perspective view and the surface a-b-c-d, and an intersecting point of a linear line passing the point C and extending in the direction of the visual axis in the perspective view and the surface a-e-f-b, to thereby find a three-dimensional coordinate on the coordinate system Σ of the points A, B and C. Another additional condition is for example that the points A, B and C are "points located on a contour surface of the total occupied region, which is visible on the screen". In this case, a coordinate of an intersecting point of a visual axis passing the designated point and the above contour surface is found.

Use of the above-mentioned sectional display visualizes a non-occupied region M that has been invisible for being hidden behind the total occupied region in the perspective view. Therefore, for instance, it becomes possible to recognize that a peripheral device is locatable in such a small place shown by a reference character 30 without fear of interference.

Furthermore, according to the above-described embodiment, the process (shown by the flowchart of FIG. 2) of recognition of interference is performed on the condition that the peripheral object 12 is displayed in the form of a layout display. It is also possible, however, to implement a similar process without carrying out the layout of the peripheral object 12, to check a position and expansion of the non-occupied region M, and to arrange the peripheral object 12 at a position considered to be most proper. Thereafter, the cycle following Step S3, which is the process mentioned above, may be again performed, thereby confirming the absence of the overlapping region H and protruding region K on the screen page displayed in Step S12.

## Claims

1. A device for determining an interference region of a robot, comprising:
storage means storing a geometric model of a robot arm;
position/posture calculation means for successively calculating position/posture of the robot arm in accordance with a motion command read from an operation program of the robot;
occupied region-calculating means for calculating a region occupied by the robot arm when the robot arm takes the position/posture in accordance with the motion command based on the calculated position/posture and the geometric model of the robot arm;
means for obtaining and updating a total occupied region of the robot arm by successively and aggregately adding the calculated occupied regions of the robot arm and store the updated total occupied region; and
displaying means for displaying the updated total occupied region on a display screen.

2. A device for determining an interference region of a robot according to claim 1, further comprising cage region setting means for setting a cage region, wherein said displaying means displays the set cage region on the display screen.

3. A device for determining an interference region of a robot according to claim 2, wherein said displaying means displays a non-occupied region not belonging to the total occupied region within the set cage region on the display screen.

4. A device for determining an interference region of a robot according to claim 2, wherein said displaying means displays a protruding region belonging to the total occupied region outside the set cage region on the display screen.

5. A device for determining an interference region of a robot according to claim 1, wherein said storage means further stores a geometric model of a peripheral object to be arranged in the vicinity of the robot arm, and said displaying means displays a region occupied by the peripheral object based on designated position/posture of the peripheral object and the stored geometric model of the peripheral object and displays an overlapping region where the region occupied by the peripheral object overlaps the total occupied region.

6. A device for determining an interference region of a robot according to claim 5, further comprising means for altering position/posture of the geometric model of the peripheral object on the display screen and means for storing the altered position/posture of the peripheral object.

7. A device for determining an interference region of a robot according to claim 1, wherein said storage means further stores a geometric model of a peripheral object to be arranged in the vicinity of the robot arm, and said device further comprises: judging means for obtaining a region occupied by the peripheral object based on designated position/posture of the peripheral object and the stored geometric model of the peripheral object, and judging whether or not an overlapping region where the region occupied by the peripheral object overlaps the total occupied region exists; and message issuing means for issuing a message indicating an existence of the overlapping region when it is judged that there exists the overlapping region by said judging means.

8. A device for determining an interference region of a robot according to claim 7, further comprising means for altering position/posture of the geometric model of the peripheral object on the display screen and means for storing the altered position/posture of the peripheral object.

9. A device for determining an interference region of a robot according to claim 1, wherein said displaying means displays a sectional view of the total occupied region taken along a designated plane.

10. A device for determining an interference region of a robot, comprising:
storage means storing geometric models of a robot arm and an end effector mounted on the robot arm;
position/posture calculation means for successively calculating position/posture of the robot arm and the end effector in accordance with a motion command read from an operation program of the robot;
occupied region-calculating means for calculating a region occupied by the robot arm and the end effector when the robot arm and the end effector take the position/posture in accordance with the motion command based on the calculated position/posture and the geometric model of the robot arm and the end effector;
means for obtaining and updating a total occupied region of the robot arm and the end effector by successively and aggregately adding the calculated occupied regions of the robot arm and the end effector and store the updated total occupied region; and
displaying means for displaying the updated total occupied region on a display screen.
